# EUROPEAN PATENT SPECIFICATION

(11) **EP 3 808 526 B1**
(45) Date of publication and mention of the grant of the patent: **31.12.2025**
(21) Application number: 19203553.3
(22) Date of filing: 16.10.2019
(51) Int. Cl.: B29C 44/58, B29C 44/34, B29C 44/44, B29C 33/00

(54) **MOLDING PRESS AND METHOD FOR PRODUCING MOLDED PARTS**
FORMPRESSE UND VERFAHREN ZUR HERSTELLUNG VON FORMTEILEN
PRESSE DE MOULAGE ET PROCÉDÉ DE PRODUCTION DE PIÈCES MOULÉES

(43) Date of publication of application: 21.04.2021
(73) Proprietor: Storopack Hans Reichenecker GmbH, 72555 Metzingen (DE)
(72) Inventor: Lopez Garcia, Tomas, 08291 RIPLOLLET (BARCELONA) (ES); Girones Subiros, Maria Helena, 08100 MOLLET DEL VALLÉS (BARCELONA) (ES); Iglesias, Eduard, 08019 BARCELONA (ES); Deiß, Volker, 34599 NEUENTAL (DE); Poisson, Charles, 49300 CHOLET (FR); Voisin, Julien, 44521 OUDON (FR); Denais, Bastien, 44200 NANTES (FR)
(74) Representative: DREISS Patentanwälte PartG mbB

(56) References cited:
- WO-A1-2016/054675
- DE-A1- 2 150 046
- KR-A- 20190 095 626
- US-A- 4 718 845
- US-A- 5 772 420
- US-B1- 6 488 884

## Description

The present invention relates generally to a molding press for producing molded parts and to a method for producing molded parts according to the preambles of the independent claims.

The molding of an expanded polymeric material such as EPS (expanded polystyrene) and EPP (expanded polypropylene) is well established for making a variety of different products. Typically, the molding process involves blowing pre-expanded beads into a mold cavity and then subjecting the beads to steam thereby causing the beads to complete their expansion process and fuse together into a unitary mass.

To create a finished molded part, a tool is typically formed to define a mold cavity that corresponds to the shape of the desired final molded part. The tool typically has perforated walls that enable steam to enter the mold cavity to facilitate expansion of beads present therein. The tool normally comprises two cooperating mold segments ("mold halfs"), which together form a mold, and the mold cavity is typically formed between the facing surfaces of the two mold segments. Each mold segment is supported by a respective mold holding portion. At least one mold holding portion is movable with respect to the other mold holding portion such that the mold cavity can be opened in order to remove the produced molded part.

WO 2016/054675 A1 discloses a molding press according to the preamble of claim 1 having a plurality of mold holding portions arranged in line and a corresponding plurality of mold segments and mold cavities such that a plurality of molded parts can be produced simultaneously "within one shot". DE 10 2015 112 149 A1 discloses an example of a mold holding portion. US 6 488 884 B1 relates to a process and apparatus for producing hollow bodies from thermoplastic material by blow molding. KR 2019 0095626 A discloses a molding device having multiple molds.

It is an object of the present invention to provide a molding press and a method for producing molded parts allowing for an increased flexibility and productivity.

This object is achieved by means of a molding press and a method for producing molded parts with the features of the independent claims. Further embodiments of the invention are defined in the dependent claims.

The molding press according to the invention can be utilized in at least two operating modes, namely in a first operating mode wherein at least two mold cavities are formed in a (typically horizontal) linear arrangement, that is one after the other, and in a second operating mode wherein only one mold cavity is formed.

It is to be understood that, of course, a mold cavity may comprise a plurality of chamber type cavity portions in a parallel arrangement. When the molding press is used in the first operating mode, wherein an intermediate structure is inserted between the first holding structure and the second holding structure, an increased productivity can be provided, because at least two molded parts may be produced simultaneously within the at least two mold cavities.

When the molding press is utilized in the second operating mode, wherein the intermediate structure is removed such that the first mold holding portion and its first mold segment may cooperate with the fourth mold holding portion and its fourth mold segment, a molded part can be produced having increased dimensions. "Cooperate" means that the first mold segment and the fourth mold segment, when approached at most to each other, act together to define a closed mold cavity, and the respective mold holding portions at least indirectly contribute to this object. All this is possible without the need of providing two separate molding presses. By consequence, the invention allows for saving costs and also for saving space which otherwise would be needed in order to arrange two separate molding presses.

In more detail, the above mentioned advantages are achieved by means of a molding press for producing molded parts comprising a first mold holding portion, a second mold holding portion, a third mold holding portion and a fourth mold holding portion, wherein the mold holding portions are adapted and arranged to each carry a mold segment. The mold holding portions may comprise structure to support and connect respective mold segments both in terms of mechanical support and supply of fluid and material.

Said first mold holding portion may be formed on a first holding structure, said fourth mold holding portion may be formed on a second holding structure, and said second and third mold holding portions may be formed on opposite sides of an intermediate structure arrangeable or "sandwiched" between said first holding structure and said second holding structure. The above-mentioned holding structures and the intermediate structure may have any appropriate shape and design in order to accommodate the mold holding portions. By way of example, at least one holding structure may comprise a holding frame. Such a holding frame may be of rectangular shape and may comprise upper and lower and lateral frame members. Also, by way of example, the mold holding portion may comprise a mold holding plate structure fixed to said holding frame.

As has been mentioned above, the intermediate structure may be non-destructively removable from the molding press and easily reinserted therein. The term "non-destructively" distinguishes the intermediate structure according to the invention from the intermediate structures of prior art molding presses which are firmly arranged within the molding press such that the molding press cannot be utilized without the intermediate structure. Also, in typical prior art molding presses, the stroke(s) of the first and second holding structures do not allow the respective mold segments to directly cooperate with each other. In contrast hereto, the molding press according to the invention can be operated both in a first operating mode with the intermediate structure and in a second operating mode without the intermediate structure.

In the first operating mode, the first mold holding portion with its first mold segment may cooperate with the second mold holding portion with its second mold segment, and the third mold holding portion segment with its third mold may cooperate with the fourth mold holding portion with its fourth mold segment. Again, "cooperate" means that the respective parts, when approached at most to each other, contribute to defining a respective closed mold cavity in which the molded part can be produced. By consequence, also the respective mold segments are cooperating with each other, and a first mold cavity is formed between the first and second mold segments and a second mold cavity is formed between the third and fourth mold segments. Since the intermediate structure is sandwiched between the first holding structure and the second holding structure, the first and second mold cavities are provided in a linear and preferably horizontal arrangement one after the other.

In the second operating mode, the first mold holding portion with its first mold segment, when approached at most to the fourth mold holding portion, may cooperate directly with the fourth mold holding portion with its fourth mold segment, without the intermediate structure and its mold holding portions and mold segments being sandwiched therebetween. By consequence, the mold segments carried by the first and fourth mold holding portions may directly cooperate with each other and may define, when approached at most to each other, one single closed mold cavity (it is again to be understood that this single mold cavity may comprise a plurality of chamber type cavity portions in a parallel arrangement).

A further embodiment is characterized in that the first holding structure is stationary and the intermediate structure and the second holding structure are horizontally movable by means of a drive, and in that the drive moves the intermediate structure and the second holding structure in a synchronized manner, e.g. using a synchronization means. Moving in a "synchronized manner" means that the mold cavity formed between the second holding structure and the intermediate structure and the mold cavity formed between the intermediate structure and the first holding structure are closed at the same time during a closing process. It is therefore possible to use one common drive both for moving the second holding structure and the intermediate structure. This reduces the costs for the molding press according to the invention.

A further embodiment is characterized in that the drive moves the intermediate structure and the second holding structure such that a distance between the first mold holding portion and the second mold holding portion and a distance between the third mold holding portion and the fourth mold holding portion is equal at all times. This means that the speed of the second holding structure is twice the speed of the intermediate structure during movement, such that the degree of opening or closure, respectively, of the first and second molds cavities is always the same. This is particularly advantageous in case that identical molded parts shall be produced in both mold cavities.

A further embodiment is characterized in that the drive comprises at least one first toothed rack extending from the first holding structure towards the intermediate structure and at least one second toothed rack extending from the second holding structure towards the intermediate structure, wherein the first and second toothed racks are kinematically coupled to each other by means of a transmission arranged on the intermediate structure. This is a robust and simple way to synchronize the movements of the second holding structure and the intermediate structure.

A further embodiment is characterized in that the transmission comprises a gear meshing on one side with the first toothed rack and on an opposite side with the second toothed rack. This embodiment further increases the simplicity and the robustness of the synchronization means.

A further embodiment is characterized in that the drive comprises a motor, in particular a hydraulic cylinder, which acts on the second holding structure. Such a motor or hydraulic cylinder allows for a precise movement.

A further embodiment is characterized in that the intermediate structure comprises channels through which hot steam and/or pressurized air can flow into a mold cavity formed between two mold segments, at least two connections being provided on the intermediate structure, one of which is provided for supplying hot steam and/or pressurized air into the first mold cavity formed between the first mold segment and the second mold segment, and the other of which is provided for supplying hot steam and/or pressurized air into the second mold cavity formed between the third mold segment and the fourth mold segment.

As has been mentioned already above, the present invention is particularly suitable for molded parts made of expanded polymeric material such as EPS (expanded polystyrene) and EPP (expanded polypropylene). Such a molding process involves blowing beads made of EPS or EPP under a certain pressure by means of pressurized air into the fully closed mold cavity such that the beads inside the mold cavity uniformly distribute, and then subjecting the beads to steam thereby causing the beads to expand and to fuse together into a unitary mass. This process is called "back pressure filling".

Another process is called "crack filling". In this case, the mold cavity in its initial state is not fully closed but rather slightly open. This not fully closed mold cavity is then filled with beads made of EPS or EPP, and only then the mold cavity is fully closed, such that the beads inside the mold cavity are put under pressure by means of the reduced volume of the mold cavity rather than by the introduction of pressurized air. Again, the pressure makes the beads to uniformly distribute everywhere within the mold cavity.

By having two separate connections for supplying the mold cavities with pressurized air and/or hot steam, the mold cavities can be pressurized with pressurized air and supplied with hot steam independently from each other.

A further embodiment is characterized in that it comprises a control device which controls the supply of steam and/or pressurized air into the mold cavities, in particular controls the supply of steam and/or pressurized air into the first mold cavity independently of the supply of steam and/or pressurized air into the second mold cavity. This embodiment is particularly advantageous in the case of the above mentioned back pressure filling process, since the pressure within each of the mold cavities can be controlled independently from the respective other mold cavity.

A further embodiment is characterized in that the intermediate structure is held movably on at least one horizontally extending support by means of at least one bearing, wherein the bearing of the intermediate structure is placed on the support from above and can be lifted from the latter. Such a structural design allows easy removal and re-insertion of the intermediate structure from and into the molding press.

A further embodiment is characterized in that the bearing of the intermediate structure comprises an upper and a lower bearing shell, at least the lower bearing shell being able to be dismantled and reassembled without destruction. This embodiment again provides an easy removal and reinsertion of the intermediate structure from and into the molding press.

A further embodiment is characterized in that the first and second mold segments, respectively, are identical to the third and fourth mold segments, respectively. With such a molding press the number of identical molded parts which can be produced within one shot can be doubled.

A further embodiment is characterized in that the first and second mold segments, respectively, are different from the third and fourth mold segments, respectively. With such a molding press within one shot two different parts can be molded.

The invention may be better understood from the following non-limiting description of a preferred embodiment, in which:
- Figure 1: is a simplified side view of a molding press according to the invention in a first operating mode, the molding press comprising a first holding structure, a second holding structure, and an intermediate structure;
- Figure 2: is a simplified side view of the molding press of figure 1 in a second operating mode, in which the intermediate structure is removed;
- Figure 3: is a perspective view of the molding press of figure 1 in the first operating mode in an open condition;
- Figure 4: is a perspective view similar to figure 3, the molding press being in a closed condition;
- Figure 5: is a view from above of the molding press of figure 1 in the first operating mode in the open condition;
- Figure 6: is a view similar to figure 5, the molding press being in a closed condition;
- Figure 7: is a perspective view of the intermediate structure together with a mold segment mounted thereon;
- Figure 8: is a perspective view of the molding press of figure 1 in the first operating mode in the open condition, the mold segments being removed;
- Figure 9: is a detailed perspective view of the intermediate structure when removed (second operating mode); and
- Figure 10: is a flowchart of a method for producing molded parts by means of the molding press of figures 1-9.

Preferred features of the present invention will now be described with particular reference to the accompanying drawings. However, it is to be understood that the features illustrated in and described with reference to the drawings are not to be construed as limiting on the scope of the invention.

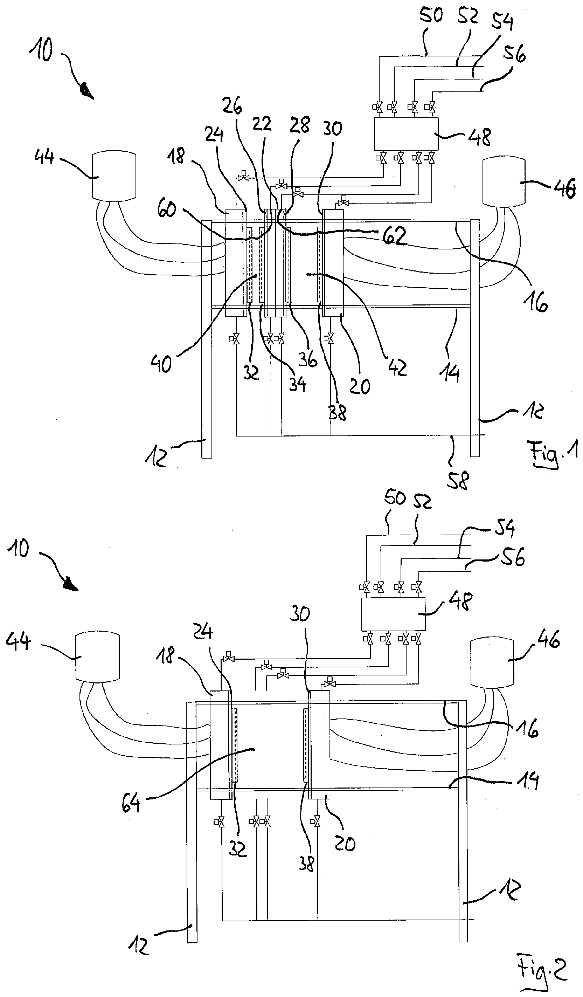

Referring to figure 1, a simplified view of a molding press is depicted, the molding press having generally the reference sign 10. Molding press 10 comprises a plurality of vertical posts 12 which support upper and lower horizontal guide bars 14 and 16. Horizontal guide bars 14 and 16 support a first stationary holding structure 18, a second horizontally movable holding structure 20 and a horizontally movable intermediate structure 22, which in the first operating mode shown in figure 1 is arranged between the first holding structure 18 and the second holding structure 20. As will be shown further below, the holding structures 18 and 20 and the intermediate structure 22 are defined as frame structures, a frame plane being vertical.

First holding structure 18 comprises a first mold holding portion 24. A second mold holding portion 26 and a third mold holding portion 28 are formed on opposite sides of the intermediate structure 22. A fourth mold holding portion 30 is formed on the second holding structure 20. First mold holding portion 24 faces second mold holding portion 26. Third mold holding portion 28 faces fourth mold holding portion 30.

Each of the mold holding portions 24-30 is adapted and arranged to carry a respective mold segment, the mold segments being designated with 32-38. The mold segments 32-38 are removably attached to the respective mold holding portions 24-30. First mold segment 32 faces second mold segment 34, and third mold segment 36 faces fourth mold segment 38. Each mold segment 32-38 defines one half of a mold cavity and may therefore also be called "mold half". By consequence, a first mold cavity 40 is defined between first mold segment 32 and second mold segment 34, when the first mold segment 32 and the second mold segment 34 are fully approached to each other, and a second mold cavity 42 is defined between third mold segment 36 and fourth mold 38 segment, when the third mold segment 36 and the fourth mold 38 segment are fully approached to each other. It is, however, to be noted that figure 1 shows the molding press 10 in a situation where the mold segments 32-38 are not approached to each other but rather are distant from each other. Cooperating mold segments 32-34 and 36-38, respectively, together form a respective mold (without reference numeral).

First holding structure 18 with its mold holding portion 24 is connected to a first plastic bead supply 44, and second holding structure 20 with its fourth mold holding portion 30 is connected to a second plastic bead supply 46. These plastic bead supplies 44 and 46 allow to fill the first and second mold cavities 40 and 42 with plastic beads. Furthermore, each of the mold holding portions 24-30 is connected through respective lines to a media block 48, which is connected to a steam supply 50, a pressurized air supply 52, a vacuum supply 54 and an outlet 56. Finally, each of the mold holding portions 24-30 is connected through respective lines with a drain 58.

Media block 48 allows to selectively connect each of the mold holding portions 24-30 and, by consequence, each of the mold cavities 40-42 with the pressurized air supply 52, the steam supply 50, the vacuum supply 54, and the outlet 56. To this end, the first holding structure 18, the second holding structure 20 and the intermediate structure 22 as well as the respective first, second, third, and fourth mold holding portions 24-30 comprise channels (not shown) through which steam can flow into the respective mold cavities 40, 42. With particular attention to the intermediate structure 22, is to be noted that two connections 60 and 62 are provided on the intermediate structure 22. Connections 60 is provided for supplying steam and/or pressurized air into the first mold cavity 14, and connection 62 is provided for supplying steam and/or pressurized air into the second mold cavity 42.

The molding press 10 further comprises a control device (not shown) which controls the media block 48 and the supply of steam 50 and/or pressurized air into the mold cavities 40 and 42. This control device is designed to control the supply of steam and/or pressurized air into the first mold cavity 40 independently of the supply of steam and/or pressurized air into the second mold cavity 42. It is to be understood that the control device may comprise a computer or other electronic device. Furthermore, in order to control the pressure of steam and/or air inside the mold cavities 40 and 42, respective pressure sensors (not shown) may be arranged within the mold cavities 40 and 42 or may be fluidly connected to the mold cavities 40 and 42 in order to provide a closed loop control of the pressure.

As mentioned above, figure 1 shows the molding press 10 in a first operating mode, in which the first mold holding portion 24 with the first mold segment 32 may cooperate with the second mold holding portion 26 with the second mold segment 34 in order to form the first mold cavity 40.

Furthermore, in this first operating mode, the third mold holding portion 28 with the third mold segment 36 may cooperate with the fourth mold holding portion 30 with the fourth mold segment 38 in order to form the second mold cavity 42. It is, however, to be noted that figure 1 shows the molding press 10 in a situation where the mold segments 32 and 34 as well as 36 and 38 are not approached to each other at most but rather are distant from each other.

However, as is shown in figure 2, the molding press 10 may be operated in a second operating mode, in which the intermediate structure 22 together with second and third mold holding portions 26 and 28 and second and third molds 34 and 36 is removed. In this second operating mode, the first mold holding portion 24 with its first mold segment 32 may cooperate with the fourth mold holding portion 30 with its fourth mold segment 38 in order to form a third mold cavity 64 when the fourth mold segment 38 is approached at most to the first mold segment 32. Again, the mold segments 32 and 38 together form a mold (without reference numeral). It is, however, to be noted that figure 2 shows the molding press 10 in a situation where the mold segments 32 and 38 are not approached at most to each other but rather are distant from each other. It is also to be noted that the mold segments 32 and 38 used in the second operating mode are not necessarily the same mold segments 32 and 38 used in the first operating mode, such that in the second operating mode parts may be manufactured which are different than in the first operating mode.

It is also to be understood that above mentioned control means may also control the pressure of the steam and of pressurized air inside the third mold cavity 64 and that the above mentioned pressure sensor may be used in order to provide for a closed loop control of said pressure inside said third mold cavity 64.

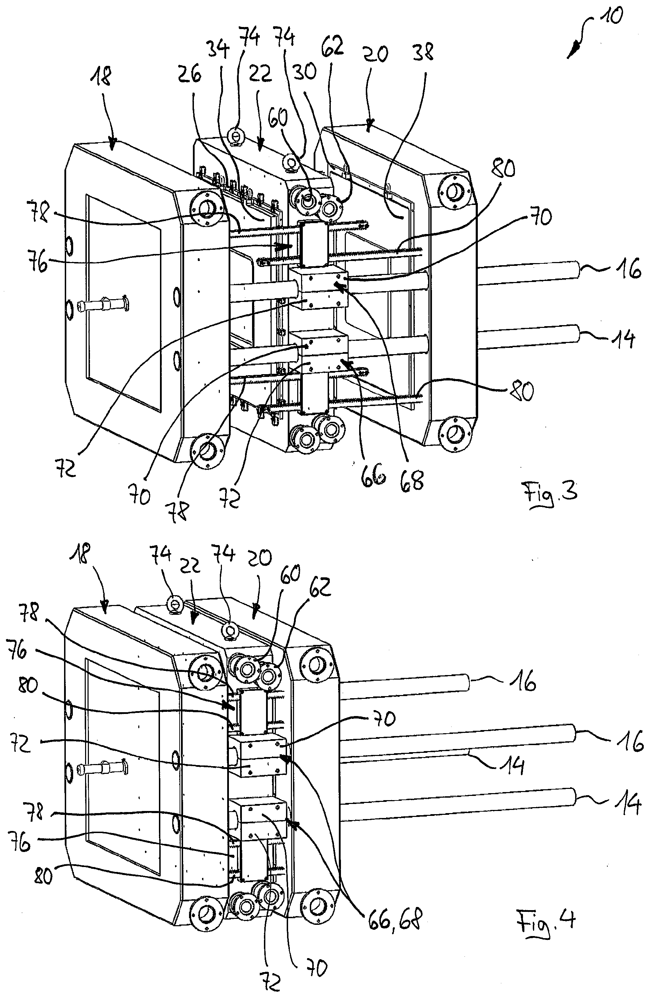

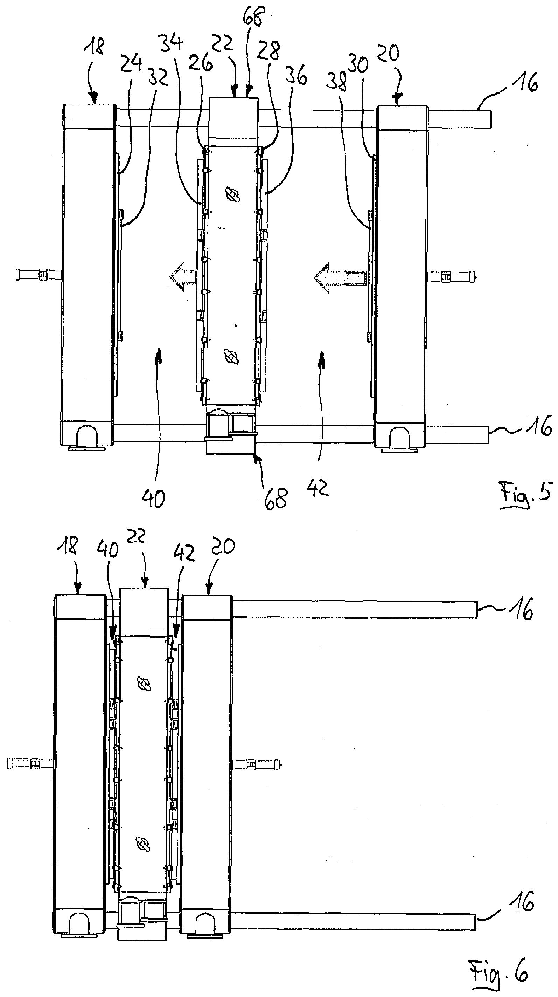

Now, reference is made to figures 3-9, which show the arrangement of first holding structure 18, second holding structure 20, and intermediate structure 22 more in detail. It can be seen from these figures that lower horizontal guide bars 14 and upper horizontal guide bars 16 movably support intermediate structure 22 and second holding structure 20, whereas said guide bars 14 and 16 are fixedly connected to stationary first holding structure 18.

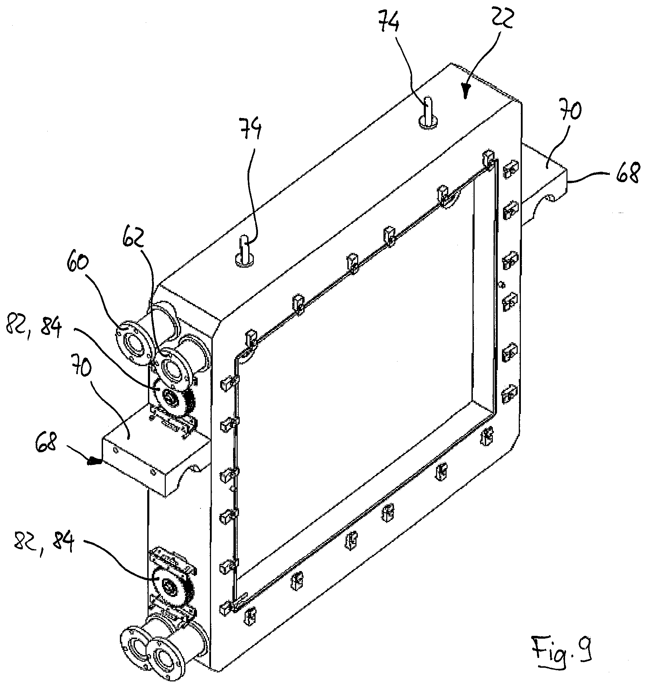

In order to movably support the intermediate structure 22 on the horizontal guide bars 14 and 16, intermediate structure 22 comprises two sliding bearings 66 and 68 on each side of the intermediate structure 22. Each sliding bearing 66 and 68 comprises an upper bearing shell 70 and a lower bearing shell 72. As can be seen from figure 9, the lower bearing shells 72 may be removed from the sliding bearings 66, 68 without destruction, that is, by way of example, simply by loosening one or more screws. When the lower bearing shells 70 and 72 are removed, the intermediate structure 22 can be removed from the molding press 10 by lifting it away by means of hoisting ears 74 fixedly attached to an upper surface of the intermediate structure 22. By doing so, the molding press 10 is switched from the first operating mode into the second operating mode.

If the molding press 10 is to be switched back from the second operating mode into the first operating mode, the intermediate structure 22, with the lower bearing shells 70 being removed, may be placed on the horizontal guide bars 14 and 16 from above, again for example by means of the hoisting ears 74. When the upper bearing shell 70 of the upper sliding bearing 68 is placed on the upper horizontal guide part 14, the lower sliding bearing 66 as well as the lower bearing shell 72 of the upper sliding bearing 68 can be mounted or reassembled again in order to securely attach the intermediate structure 22 to the horizontal guide bars 14 and 16, while allowing the intermediate structure 22 to horizontally move.

In order to move the second holding structure 20 and the intermediate structure 22 for closing and opening the first and second mold cavities 40 and 42, when the molding press 10 is operated in the first operating mode, a drive is provided, which may comprise a motor, such as a hydraulic cylinder (not shown). The drive may be connected solely to second holding structure 20. In order to allow for a synchronized movement of the second holding structure 20 and the intermediate structure 22 in a way that a distance between the first mold holding portion 24 and the second mold holding portion 26 and a distance between the third mold holding portion 28 and the fourth mold holding portion 30 is equal at all times, the drive comprises a synchronization means 76.

In the present embodiment, by way of example, the synchronization means 76 comprises, on each side of the molding press 10, first lower and upper toothed racks 78 extending horizontally from the first holding structure 18 towards the intermediate structure 22. Further, the synchronization means 76 comprises, on each side of the molding press 10, second lower and upper toothed racks 80 extending from the second holding structure 20 towards the intermediate structure 22.

The lower and upper first toothed racks 78 are kinematically coupled to the lower and upper second toothed racks 80 by means of a respective transmission 82 arranged on the intermediate structure 22. Each transmission 82 comprises a gear 84 (see fig. 9), which meshes on its upper side with a first toothed rack 78 and on its opposite lower side with a second toothed rack 80.

It is to be understood that also other embodiments of the synchronization means 76 may be possible. By way of example, the second holding structure 20 and the intermediate structure 22 each may comprise separate drive means, which are electronically synchronized. It is also to be understood that for removing the intermediate structure 22 in order to switch the molding press 10 from the first operating state into the second operating state, also the transmission 82 may be partially dismantled.

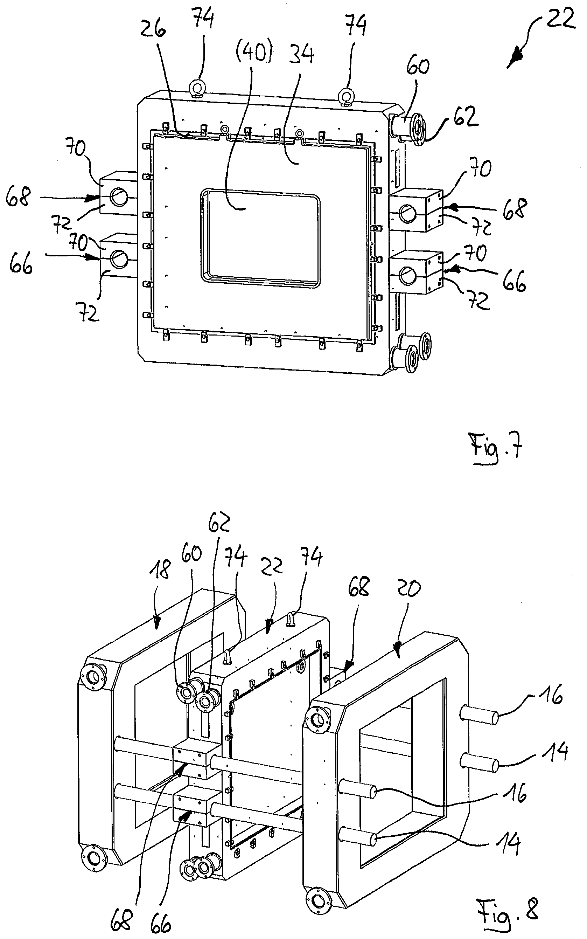

From figure 8 it can be seen that the holding structures 18 and 20 may be realized, by way of example, as frame structures having vertical side frame members and horizontal lower and upper frame members. As can be seen from figure 9, the intermediate structure 22 may be designed similarly.

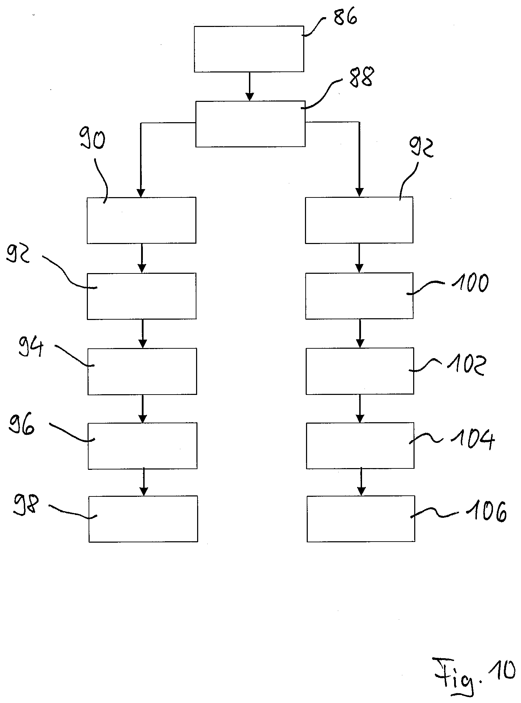

Figure 10 shows a flowchart for a method for producing molded parts by means of the molding press 10 described above. The method starts in block 86. In block 88, a user selects one of a first operating mode and a second operating mode. If the user selects the first operating mode, the method continues in block 90, whereas if the user selects the second operating mode, the method continues in block 92.

In block 90 (first operating mode), it is verified whether or not the intermediate structure 22 is inserted between the first holding structure 18 and the second holding structure 20 of the molding press 10. If it is not inserted yet, the intermediate structure 22 is inserted. In block 92, the four mold segments 32-38 are provided. In a subsequent block 94, the first mold segment 32 is attached to the first holding structure 18, the second mold segment 34 is attached to that side of the intermediate structure 22 which faces the first holding structure 18, the third mold segment 36 is attached to that side of the intermediate structure 22 which faces the second holding structure 20, and the fourth mold segment 38 is attached to the second holding structure 20.

In a block 96, the second holding structure 20 is approached at most to the intermediate structure 22, and the intermediate structure 22 is approached at most to the first holding structure 18. By doing so, respective first and second closed mold cavities 40 and 42 are defined between the mold segments 32 and 34, on one side, and between the mold segments 36 and 38, on the other side. In a block 98, in each of the first and second mold cavities 40 and 42 a molded part is produced by filling each mold cavity 40, 42 with expandable beads of EPP or EPS and by introducing hot steam into each mold cavity 40, 42.

In block 92 (second operating mode), it is verified whether or not the intermediate structure 22 is inserted between the first holding structure 18 and the second holding structure 20 of the molding press 10. If it is inserted, the intermediate structure 22 is removed.

In a subsequent block 100, two mold segments, namely first mold segment 32 and fourth mold segment 38, are provided. In block 102, the first mold segment 32 is attached to the first holding structure 18, and the fourth mold segment 38 is attached to the second holding structure 20 of the molding press 10. In block 104, the second holding structure 20 is approached to the first holding structure 18 at most, so that the mold cavity 64 (figure 2) is defined between the two mold segments 32 and 38. Finally, in block 106, a molded part is produced within mold cavity 64 by filling the mold cavity 64 with expandable beads made of EPS or EPP and by introducing hot steam into the mold cavity 64.

## Claims

1. A molding press (10) for producing molded parts comprising a first mold holding portion (24), a second mold holding portion (26), a third mold holding portion (28) and a fourth mold holding portion (30), wherein
the mold holding portions (24-30) are adapted and arranged to each carry a mold segment (32-38), and wherein
said first mold holding portion (24) is formed on a first holding structure (18), said fourth mold holding portion (30) is formed on a second holding structure (20), and said second and third mold holding portions (26, 28) are formed on opposite sides of an intermediate structure (22) arrangeable between said first holding structure (18) and said second holding structure (20),
**characterized in that**
the intermediate structure (22) can be removed non-destructively from the molding press (10) and reinserted therein, such that the molding press (10) can be operated in a first operating mode with the intermediate structure (22) and in a second operating mode without the intermediate structure (22).

2. The molding press (10) according to claim 1, **characterized in that** the first holding structure (18) is stationary and the intermediate structure (22) and the second holding structure (20) are horizontally movable by means of a drive, and **in that** the drive is adapted and designed to move the intermediate structure (22) and the second holding structure (20) in a synchronized manner.

3. The molding press (10) according to claim 2, **characterized in that** the drive is adapted and designed to move the intermediate structure (22) and the second holding structure (20) such that a distance between the first mold holding portion (24) and the second mold holding (26) portion and a distance between the third mold holding portion (28) and the fourth mold holding portion (30) is equal at all times.

4. The molding press (10) according to any 1 of claims 2 and 3, **characterized in that** the drive comprises at least one first toothed rack (78) extending from the first holding structure (18) towards the intermediate structure (22) and at least one second toothed rack (80) extending from the second holding structure (20) towards the intermediate structure (22), wherein the first and second toothed racks (78, 80) are kinematically coupled to each other by means of a transmission (82) arranged on the intermediate structure (22).

5. The molding press (10) according to claim 4, **characterized in that** the transmission (82) comprises a gear (84) meshing on one side with the first toothed rack (78) and on an opposite side with the second toothed rack (80).

6. The molding press (10) according to at least one of claims 2-5, **characterized in that** the drive comprises a motor, in particular a hydraulic cylinder, which acts on the second holding structure (20).

7. The molding press (10) according to at least one of the preceding claims, **characterized in that** the intermediate structure (22) comprises channels through which steam and/or pressurized air can flow into a mold cavity (40, 42) formed between two mold segments (32-38), at least two connections (60, 62) being provided on the intermediate structure (22), one (60) of which is provided for supplying steam and/or pressurized air into the first mold cavity (40) formed between the first mold segment (32) and the second mold segment (34), and the other (62) of which is provided for supplying steam and/or pressurized air into the second mold cavity (42) formed between the third mold segment (36) and the fourth mold segment (38).

8. The molding press (10) according to claim 7, **characterized in that** it comprises a control device which is adapted and designed to control the supply of steam and/or pressurized air into the mold cavities (40, 42, 64), in particular controls the supply of steam and/or pressurized air into the first mold cavity (40) independently of the supply of steam and/or pressurized air into the second mold cavity (42).

9. The molding press (10) according to at least one of the preceding claims, **characterized in that** the intermediate structure (22) is held movably on at least one horizontally extending support (14, 16) by means of at least one bearing (66, 68), wherein the bearing (66, 68) of the intermediate structure (22) is adapted and designed to be placed on the support (14, 16) from above and to be lifted from the latter.

10. The molding press (10) according to claim 9, **characterized in that** the bearing (66, 68) of the intermediate structure (22) comprises an upper and a lower bearing shell (70, 72), at least the lower bearing shell (72) being able to be dismantled and reassembled without destruction.

11. The molding press (10) according to at least one of the preceding claims, **characterized in that** the first and second mold segments (32, 34), respectively, are identical to the third and fourth mold segments (36, 38), respectively.

12. The molding press (10) according to at least one of the preceding claims 1-11, **characterized in that** the first and second molds (32, 34), respectively, are different from the third and fourth molds (36, 38), respectively.

13. Method for producing molded parts by means of a molding press (10), **characterized in that** it comprises the following steps:
a. selecting one of a first and a second operating mode;
b. in a first operating mode:
i. if not inserted yet: inserting an intermediate structure (22) between a first stationary holding structure (18) and a second horizontally movable holding structure (20) of the molding press (10);
ii. providing four mold segments (32-38);
iii. attaching a first mold segment (32) to said first stationary holding structure (18), a second mold segment (34) to one side of said intermediate structure (22), a third mold segment (36) to another side of said intermediate structure (22), and a fourth mold segment (38) to said second holding structure (20);
iv. approaching the second holding structure (20) to the intermediate structure (22) and approaching the intermediate structure (22) to the first holding structure (18) so that a respective closed mold cavity (40, 42) may be defined between the mold segments (32, 34) of the first holding structure (18) and the intermediate structure (22) and between the mold segments (36, 38) of the intermediate structure (22) and the second holding structure (20);
v. producing a molded part in each mold cavity (40, 42) by filling each mold cavity (40, 42) with hot steam and expandable plastic beads;
c. in a second operating mode:
i. if inserted: removing an intermediate structure (22) from between a first stationary holding structure (18) and a second horizontally movable holding structure (20) of the molding press (10);
ii. providing two mold segments (32, 38);
iii. attaching one mold segment (32) to the first stationary holding structure (18) and the other mold segment (38) to the second horizontally movable holding structure (20) of the molding press (10);
iv. approaching the second holding structure (20) to the first holding structure (18) so that a mold cavity (64) may be defined between the two mold segments (32, 38);
v. producing a molded part by filling the mold cavity (64) with hot steam and expandable plastic beads.

## Patentansprüche

1. Formpresse (10) zum Herstellen von geformten Teilen, umfassend einen ersten Formhalteabschnitt (24), einen zweiten Formhalteabschnitt (26), einen dritten Formhalteabschnitt (28) und einen vierten Formhalteabschnitt (30), wobei
die Formhalteabschnitte (24-30) angepasst und angeordnet sind, um jeweils ein Formsegment (32-38) zu tragen, und wobei
wobei der erste Formhalteabschnitt (24) auf einer ersten Haltestruktur (18) ausgebildet ist, der vierte Formhalteabschnitt (30) auf einer zweiten Haltestruktur (20) ausgebildet ist und der zweite und der dritte Formhalteabschnitt (26, 28) auf gegenüberliegenden Seiten einer Zwischenstruktur (22) ausgebildet sind, die zwischen der ersten Haltestruktur (18) und der zweiten Haltestruktur (20) angeordnet werden kann,
**dadurch gekennzeichnet, dass**
die Zwischenstruktur (22) aus der Formpresse (10) zerstörungsfrei entfernt und darin wieder eingesetzt werden kann, derart, dass die Formpresse (10) in einem ersten Betriebsmodus mit der Zwischenstruktur (22) und in einem zweiten Betriebsmodus ohne die Zwischenstruktur (22) betrieben werden kann.

2. Formpresse (10) nach Anspruch 1, **dadurch gekennzeichnet, dass** die erste Haltestruktur (18) ortsfest ist und die Zwischenstruktur (22) und die zweite Haltestruktur (20) mittels eines Antriebs horizontal bewegbar sind, und dadurch dass der Antrieb angepasst und gestaltet ist, um die Zwischenstruktur (22) und die zweite Haltestruktur (20) auf synchronisierte Weise zu bewegen.

3. Formpresse (10) nach Anspruch 2, **dadurch gekennzeichnet, dass** der Antrieb angepasst und gestaltet ist, um die Zwischenstruktur (22) und die zweite Haltestruktur (20) zu bewegen, derart, dass ein Abstand zwischen dem ersten Formhalteabschnitt (24) und dem zweiten Formhalteabschnitt (26) und ein Abstand zwischen dem dritten Formhalteabschnitt (28) und dem vierten Formhalteabschnitt (30) jederzeit gleich ist.

4. Formpresse (10) nach einem der Ansprüche 2 und 3, **dadurch gekennzeichnet, dass** der Antrieb mindestens eine erste Zahnstange (78), die sich von der ersten Haltestruktur (18) zu der Zwischenstruktur (22) hin erstreckt, und mindestens eine zweite Zahnstange (80), die sich von der zweiten Haltestruktur (20) zu der Zwischenstruktur (22) hin erstreckt, umfasst, wobei die erste und die zweite Zahnstange (78, 80) mittels eines Getriebes (82), das auf der Zwischenstruktur (22) angeordnet ist, kinematisch miteinander gekoppelt sind.

5. Formpresse (10) nach Anspruch 4, **dadurch gekennzeichnet, dass** das Getriebe (82) ein Zahnrad (84) umfasst, das auf einer Seite mit der ersten Zahnstange (78) und auf einer gegenüberliegenden Seite mit der zweiten Zahnstange (80) eingreift.

6. Formpresse (10) nach mindestens einem der Ansprüche 2 bis 5, **dadurch gekennzeichnet, dass** der Antrieb einen Motor, insbesondere einen Hydraulikzylinder umfasst, der auf die zweite Haltestruktur (20) wirkt.

7. Formpresse (10) nach mindestens einem der vorstehenden Ansprüche, **dadurch gekennzeichnet, dass** die Zwischenstruktur (22) Kanäle, durch die Dampf und/oder Druckluft in einen Formhohlraum (40, 42) strömen kann, der zwischen zwei Formsegmenten (32-38) ausgebildet ist, umfasst, wobei mindestens zwei Verbindungen (60, 62) an der Zwischenstruktur (22) bereitgestellt sind, von denen eine (60) zum Zuführen von Dampf und/oder Druckluft in den ersten Formhohlraum (40), der zwischen dem ersten Formsegment (32) und dem zweiten Formsegment (34) ausgebildet ist, und die andere (62) zum Zuführen von Dampf und/oder Druckluft in den zweiten Formhohlraum (42), der zwischen dem dritten Formsegment (36) und dem vierten Formsegment (38) ausgebildet ist, bereitgestellt ist.

8. Formpresse (10) nach Anspruch 7, **dadurch gekennzeichnet, dass** sie eine Steuereinrichtung, die angepasst und gestaltet ist, um die Zufuhr von Dampf und/oder Druckluft in die Formhohlräume (40, 42, 64) zu steuern, insbesondere die Zufuhr von Dampf und/oder Druckluft in den ersten Formhohlraum (40) unabhängig von der Zufuhr von Dampf und/oder Druckluft in den zweiten Formhohlraum (42) zu steuern, umfasst.

9. Formpresse (10) nach mindestens einem der vorstehenden Ansprüche, **dadurch gekennzeichnet, dass** die Zwischenstruktur (22) auf mindestens einer sich horizontal erstreckenden Stütze (14, 16) mittels mindestens eines Lagers (66, 68) bewegbar gehalten wird, wobei das Lager (66, 68) der Zwischenstruktur (22) angepasst und gestaltet ist, um auf der Stütze (14, 16) von oben platziert zu werden und von der Letzteren gehoben zu werden.

10. Formpresse (10) nach Anspruch 9, **dadurch gekennzeichnet, dass** das Lager (66, 68) der Zwischenstruktur (22) eine obere und eine untere Lagerschale (70, 72) umfasst, wobei mindestens die untere Lagerschale (72) in der Lage ist, ohne Zerstörung abgebaut und wieder zusammengebaut zu werden.

11. Formpresse (10) nach mindestens einem der vorstehenden Ansprüche, **dadurch gekennzeichnet, dass** das erste bzw. das zweite Formsegment (32, 34) mit dem dritten bzw. dem vierten Formsegment (36, 38) identisch ist.

12. Formpresse (10) nach mindestens einem der vorstehenden Ansprüche 1 bis 11, **dadurch gekennzeichnet, dass** die erste bzw. die zweite Form (32, 34) sich von der dritten bzw. der vierten Form (36, 38) unterscheiden.

13. Verfahren zum Herstellen von geformten Teilen mittels einer Formpresse (10), **dadurch gekennzeichnet, dass** es die folgenden Schritte umfasst:
a. Auswählen eines von einem ersten und einem zweiten Betriebsmodus;
b. in einem ersten Betriebsmodus:
i. falls noch nicht eingesetzt: Einsetzen einer Zwischenstruktur (22) zwischen einer ersten ortsfesten Haltestruktur (18) und einer zweiten horizontal bewegbaren Haltestruktur (20) der Formpresse (10);
ii. Bereitstellen von vier Formsegmenten (32-38);
iii. Anbringen eines ersten Formsegments (32) an der ersten ortsfesten Haltestruktur (18), eines zweiten Formsegments (34) an einer Seite der Zwischenstruktur (22), eines dritten Formsegments (36) an einer anderen Seite der Zwischenstruktur (22) und eines vierten Formsegments (38) an der zweiten Haltestruktur (20);
iv. Annähern der zweiten Haltestruktur (20) an die Zwischenstruktur (22) und Annähern der Zwischenstruktur (22) an die erste Haltestruktur (18), sodass ein jeweils geschlossener Formhohlraum (40, 42) zwischen den Formsegmenten (32, 34) der ersten Haltestruktur (18) und der Zwischenstruktur (22) und zwischen den Formsegmenten (36, 38) der Zwischenstruktur (22) und der zweiten Haltestruktur (20) definiert werden kann;
v. Herstellen eines geformten Teils in jedem Formhohlraum (40, 42) durch Füllen jedes Formhohlraums (40, 42) mit heißem Dampf und expandierbaren Kunststoffkügelchen;
c. in einem zweiten Betriebsmodus:
i. falls eingesetzt: Entfernen einer Zwischenstruktur (22) zwischen einer ersten ortsfesten Haltestruktur (18) und einer zweiten horizontal bewegbaren Haltestruktur (20) der Formpresse (10);
ii. Bereitstellen von zwei Formsegmenten (32, 38);
iii. Anbringen eines Formsegments (32) an der ersten ortsfesten Haltestruktur (18) und des anderen Formsegments (38) an der zweiten horizontal bewegbaren Haltestruktur (20) der Formpresse (10);
iv. Annähern der zweiten Haltestruktur (20) an die erste Haltestruktur (18), sodass ein Formhohlraum (64) zwischen den zwei Formsegmenten (32, 38) definiert werden kann;
v. Herstellen eines geformten Teils durch Füllen des Formhohlraums (64) mit heißem Dampf und expandierbaren Kunststoffkügelchen.

## Revendications

1. Presse à mouler (10) destinée à produire des pièces moulées, comprenant une première partie de maintien de moule (24), une deuxième partie de maintien de moule (26), une troisième partie de maintien de moule (28) et une quatrième partie de maintien de moule (30), dans laquelle
les parties de maintien de moule (24-30) sont adaptées et agencées pour supporter chacune un segment de moule (32-38), et dans laquelle
ladite première partie de maintien de moule (24) est formée sur une première structure de maintien (18), ladite quatrième partie de maintien de moule (30) est formée sur une deuxième structure de maintien (20), et lesdites deuxième et troisième parties de maintien de moule (26, 28) sont formées sur les côtés opposés d'une structure intermédiaire (22) pouvant être disposée entre ladite première structure de maintien (18) et ladite deuxième structure de maintien (20),
**caractérisée en ce que**
la structure intermédiaire (22) peut être retirée de manière non destructive de la presse à mouler (10) et réinsérée dans celle-ci, de sorte que la presse à mouler (10) peut fonctionner dans un premier mode de fonctionnement avec la structure intermédiaire (22) et dans un second mode de fonctionnement sans la structure intermédiaire (22).

2. La presse à mouler (10) selon la revendication 1, **caractérisée en ce que** la première structure de maintien (18) est fixe et la structure intermédiaire (22) et la deuxième structure de maintien (20) sont mobiles horizontalement au moyen d'un entraînement, et **en ce que** l'entraînement est adapté et conçu pour déplacer la structure intermédiaire (22) et la deuxième structure de maintien (20) de manière synchronisée.

3. La presse à mouler (10) selon la revendication 2, **caractérisée en ce que** l'entraînement est adapté et conçu pour déplacer la structure intermédiaire (22) et la deuxième structure de maintien (20) de telle sorte qu'une distance entre la première partie de maintien de moule (24) et la deuxième partie de maintien de moule (26) et une distance entre la troisième partie de maintien de moule (28) et la quatrième partie de maintien de moule (30) soient égales à tout moment.

4. La presse à mouler (10) selon l'une quelconque des revendications 2 et 3, **caractérisée en ce que** l'entraînement comprend au moins une première crémaillère (78) s'étendant depuis la première structure de maintien (18) vers la structure intermédiaire (22) et au moins une deuxième crémaillère (80) s'étendant depuis la deuxième structure de maintien (20) vers la structure intermédiaire (22), les première et deuxième crémaillères (78, 80) étant couplées cinématiquement l'une à l'autre au moyen d'une transmission (82) disposée sur la structure intermédiaire (22).

5. La presse à mouler (10) selon la revendication 4, **caractérisée en ce que** la transmission (82) comprend un engrenage (84) engrenant d'un côté avec la première crémaillère (78) et de l'autre côté avec la deuxième crémaillère (80).

6. La presse à mouler (10) selon au moins l'une des revendications 2 à 5, **caractérisée en ce que** l'entraînement comprend un moteur, en particulier un vérin hydraulique, qui agit sur la deuxième structure de maintien (20).

7. La presse à mouler (10) selon au moins l'une des revendications précédentes, **caractérisée en ce que** la structure intermédiaire (22) comprend des canaux à travers lesquels de la vapeur et/ou de l'air sous pression peuvent s'écouler dans une cavité de moule (40, 42) formée entre deux segments de moule (32-38), au moins deux raccords (60, 62) étant prévus sur la structure intermédiaire (22), dont l'une (60) est prévue pour alimenter en vapeur et/ou en air comprimé la première cavité de moule (40) formée entre le premier segment de moule (32) et le deuxième segment de moule (34), et l'autre (62) étant prévue pour alimenter en vapeur et/ou en air comprimé la deuxième cavité de moule (42) formée entre le troisième segment de moule (36) et le quatrième segment de moule (38).

8. La presse à mouler (10) selon la revendication 7, **caractérisée en ce qu'**elle comprend un dispositif de commande qui est adapté et conçu pour commander l'alimentation en vapeur et/ou en air comprimé dans les cavités du moule (40, 42, 64), en particulier contrôle l'alimentation en vapeur et/ou en air comprimé dans la première cavité de moule (40) indépendamment de l'alimentation en vapeur et/ou en air comprimé dans la deuxième cavité de moule (42).

9. Presse à mouler (10) selon au moins l'une des revendications précédentes, **caractérisée en ce que** la structure intermédiaire (22) est maintenue de manière mobile sur au moins un support s'étendant horizontalement (14, 16) au moyen d'au moins un palier (66, 68), le palier (66, 68) de la structure intermédiaire (22) étant adapté et conçu pour être placé sur le support (14, 16) par le haut et pour être soulevé de ce dernier.

10. Presse à mouler (10) selon la revendication 9, **caractérisée en ce que** le palier (66, 68) de la structure intermédiaire (22) comprend une coquille de palier supérieure et une coquille de palier inférieure (70, 72), au moins la coquille de palier inférieure (72) pouvant être démontée et remontée sans destruction.

11. Presse à mouler (10) selon au moins l'une des revendications précédentes, **caractérisée en ce que** les premier et deuxième segments de moule (32, 34) sont respectivement identiques aux troisième et quatrième segments de moule (36, 38).

12. Presse à mouler (10) selon au moins l'une des revendications précédentes 1 à 11, **caractérisée en ce que** les premier et deuxième moules (32, 34) sont respectivement différents des troisième et quatrième moules (36, 38).

13. Procédé de fabrication de pièces moulées au moyen d'une presse à mouler (10), **caractérisé en ce qu'**il comprend les étapes suivantes:
a. sélectionner l'un d'un premier et d'un deuxième mode de fonctionnement;
b. dans un premier mode de fonctionnement :
i. si ce n'est pas encore fait: insérer une structure intermédiaire (22) entre une première structure de maintien fixe (18) et une deuxième structure de maintien mobile horizontalement (20) de la presse à mouler (10);
ii. fournir quatre segments de moule (32-38);
iii. fixer un premier segment de moule (32) à ladite première structure de maintien fixe (18), un deuxième segment de moule (34) à un côté de ladite structure intermédiaire (22), un troisième segment de moule (36) à un autre côté de ladite structure intermédiaire (22) et un quatrième segment de moule (38) à ladite deuxième structure de maintien (20);
iv. rapprocher la deuxième structure de maintien (20) de la structure intermédiaire (22) et rapprocher la structure intermédiaire (22) de la première structure de maintien (18) de manière à définir une cavité de moule fermée respective (40, 42) entre les segments de moule (32, 34) de la première structure de maintien (18) et de la structure intermédiaire (22) et entre les segments de moule (36, 38) de la structure intermédiaire (22) et la deuxième structure de maintien (20);
v. produire une pièce moulée dans chaque cavité du moule (40, 42) en remplissant chaque cavité du moule (40, 42) avec de la vapeur chaude et des billes de plastique expansibles;
c. dans un deuxième mode de fonctionnement:
i. si insérée : retrait d'une structure intermédiaire (22) située entre une première structure de maintien fixe (18) et une deuxième structure de maintien mobile horizontalement (20) de la presse à mouler (10);
ii. fournir deux segments de moule (32, 38);
iii. fixer un segment de moule (32) à la première structure de maintien fixe (18) et l'autre segment de moule (38) à la deuxième structure de maintien mobile horizontalement (20) de la presse à mouler (10);
iv. rapprocher la deuxième structure de maintien (20) de la première structure de maintien (18) de manière à définir une cavité de moule (64) entre les deux segments de moule (32, 38);
v. produire une pièce moulée en remplissant la cavité du moule (64) avec de la vapeur chaude et des billes de plastique expansibles.
